# EUROPEAN PATENT SPECIFICATION

(11) **EP 1 025 971 B1**
(45) Date of publication and mention of the grant of the patent: **02.07.2003**
(21) Application number: 99830050.3
(22) Date of filing: 03.02.1999
(51) Int. Cl.: B29C 33/30, B43K 23/12, B29C 33/00

(54) **Mould for writing instrument cap and respective cap**
Formwerkzeug für eine Kappe eines Schreibgeräts, sowie entsprechende Kappe
Moule pour bouchon de stylo, et bouchon correspondant

(43) Date of publication of application: 09.08.2000
(73) Proprietor: Universal S.p.A., 10036 Settimo Torinese (Torino) (IT)
(72) Inventor: Quercioli, Enrico, 10036 Settimo Torinese (Torino) (IT)
(74) Representative: Rambelli, Paolo

(56) References cited:
- GB-A- 2 174 374
- GB-A- 2 220 199
- GB-A- 2 225 550
- US-A- 5 127 754
- US-A- 5 203 637
- US-A- 5 385 466
- PATENT ABSTRACTS OF JAPAN vol. 096, no. 008, 30 August 1996 & JP 08 099337 A (PENTEL KK), 16 April 1996

## Description

The present invention relates to a mould for a cap of a writing instrument, including a substantially cylindrical female mould having a head portion and adapted to define a main body of the cap having a head end, a male mould arranged coaxially within the female mould and intended to form an auxiliary blind-ended casing in the main body of the cap for sealingly housing the tip of the writing instrument, and a sleeve interposed coaxially between the male and female moulds, shaped to define a plurality of axial ventilation channels which extend between the auxiliary casing and the principal body and open at the head end of the cap.

A mould of the type described above is used to produce a cap of the type described in Italian Utility Model Application No. 53431-B/88 in the name of the same Applicant. Here, the end of the. sleeve adjacent the head portion of the female mould forms a relatively thin wall part which projects such that it is radially separated both from the female mould and the male mould. Due to the shape of this mould, the end of the tube adjacent the head portion may be subjected, after repeated moulding cycles, to flexing deformations which alter the distance between the male and female moulds, with the result that the sleeve must frequently be replaced in order to avoid the risk of obtaining a large number of defective parts.

In addition, removable caps for writing instruments are subject to safety standards which require them to have axial ventilation ducts in order to avoid the risk of suffocation in the case of accidental ingestion by the user. In the event that the ingested cap comes to rest with its head end against a wall of the user's respiratory tract, for example the throat, it is however possible that the known ventilation channels will be blocked at the end part of the head of the cap, so that the risk of suffocation is not completely removed by forming axial ventilation channels, according to the teachings of the prior art.

In order to overcome these disadvantages, the subject of the invention is a mould of the type described above, characterised in that the female mould includes a plurality of elements for centring the end of the sleeve adjacent the said head portion of the mould, the centring elements being adapted to define in the cap radial ventilation apertures radially extending through the main body of the cap from the said axial ventilation channels to an outer surface of the said main body corresponding to an inner surface of the female mould.

By virtue of this arrangement, the centring elements enable the position of the end of the sleeve adjacent the head portion of the female mould to be defined with precision, thus ensuring that the shape of the part of the mould in the region corresponding to the head end of the cap is maintained over a long period of time, and defining, close to the head end of the cap, a plurality of radial apertures connected to the axial ventilation channels, which apertures ensure the possibility of breathing through the cap in the event that the cap is swallowed and its head end comes to rest against a wall of the user's respiratory tract.

The present invention further relates to a cap for a writing instrument, including a substantially cylindrical main body having an open end for the axial insertion of the writing instrument, and a head end opposite the open end provided with an auxiliary blind-ended casing arranged coaxially within the main body for sealingly housing the tip of the writing instrument, a plurality of axial ventilation channels being present between the main body and the auxiliary casing, which channels open at the head end of the cap, and a plurality of radial ventilation apertures being formed at the head end of the cap and being connected to the said axial ventilation channels.

A cap of the type described above is known from US-A-5,127,754.

According to the invention, the above described cap is characterised in that the said ventilation apertures radially extend through the main body from the said axial ventilation channels, whereby the said axial ventilation channels radially open outwards.

Further characteristics and advantages of the invention will become clearer from the following detailed description, given purely by way of non-limitative example and with reference to the accompanying drawings in which:
Figure 1 is a sectional side view of a mould according to the invention;
Figure 2 is a view on an enlarged scale of a detail indicated with the arrow II in Figure 1;
Figure 3 is a sectional front view taken on the line III-III of Figure 2;
Figure 4 is a side view of a cap obtainable using the mould; and
Figure 5 is a sectional side view of the cap of Figure 4.

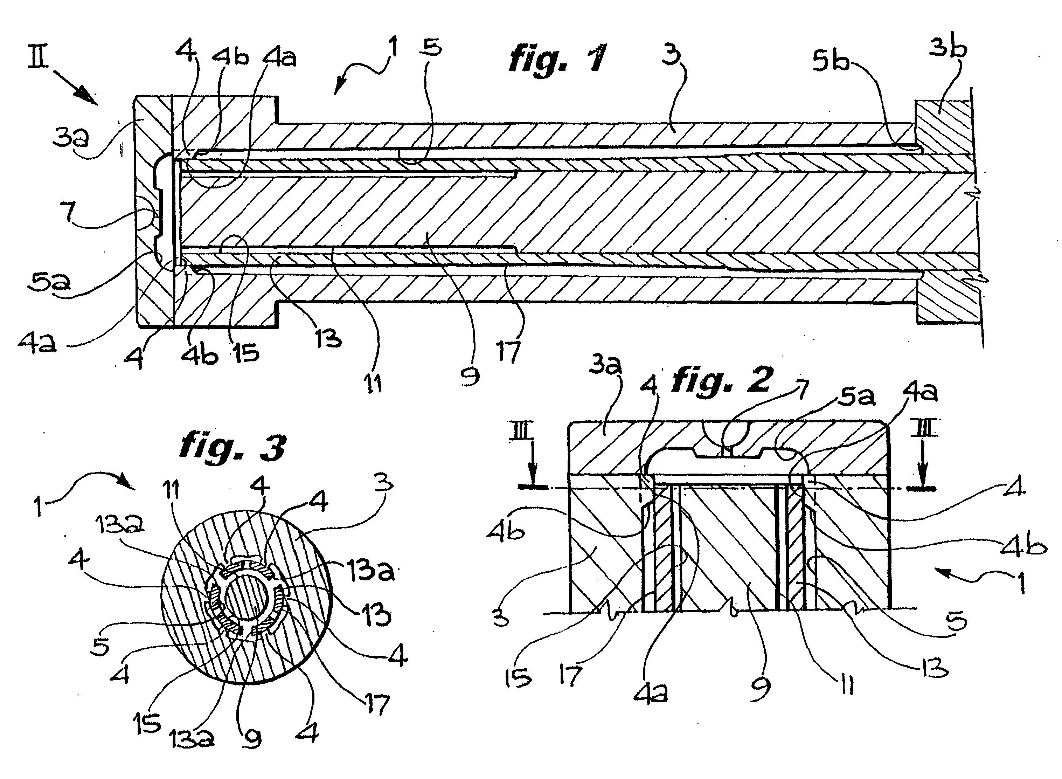

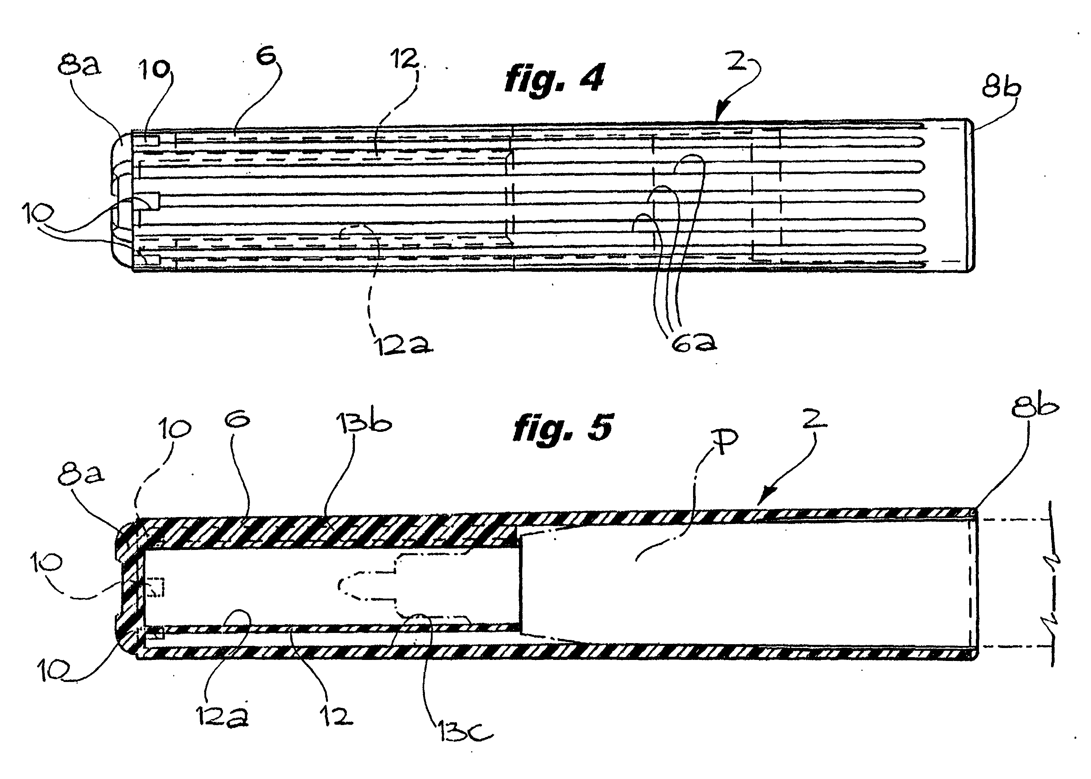

With reference to the drawings, a mould according to the invention is indicated 1 in Figures 1 to 3. The mould 1 enables a cap 2 for a writing instrument, illustrated in Figures 4 and 5, to be obtained in a moulding process by the injection of plastics material.

The mould 1 includes a substantially cylindrical female mould 3, the inner surface 5 of which is advantageously provided with ribs to define a corresponding outer surface of the cap 2, and a substantially disc-shaped head portion 3a intended to form the head end of the cap 2, which head portion has a shaped cavity 5a. An axial injection channel 7 is located in the head end 3a for the introduction of the plastics material for performing the moulding operation in the closed mould 1.

A sleeve 13 is arranged coaxially within the female mould 3, which sleeve has a relatively thin tubular wall and a plurality of axial slots 13a (see Figure 3), for example three, the purpose of which will become clear below, so that it has three coaxial arcuate arms. The outer surface 17 of the sleeve 13 faces the inner surface 5 of the female mould 3 to define a first tubular moulding cavity. The first tubular moulding cavity is delimited at the part opposite the head portion 3a by a countermould 3b which functions as an extractor, in which an annular groove 5b is formed.

A rod or punch 9 which functions as the male mould is arranged coaxially within the sleeve 13 and has a portion with a diameter corresponding to the inner diameter of the sleeve 13 in its part furthest away from the head portion 3a, and a portion of lesser diameter closer to the head portion 3a. The radially outer surface of the portion of the male mould 9 having the smaller diameter, indicated 11, faces an inner surface 15 of the sleeve 13, a second tubular moulding cavity being defined between the surfaces 11 and 15.

According to the invention, a plurality of projections 4 extend radially from the surface 5 of the part of female mould 3 closest to the head portion 3a, preferably equi-angularly spaced with respect to the section of the mould 3 and being six in number, acting as centring elements for the free end of the sleeve 13, in particular, for the three coaxial arms of this end.

Each projection 4 has an axially extending radial abutment surface 4a for the arms of the sleeve 13 and is advantageously provided with an inclined surface 4b at the end opposite the head portion 3a, which forms a guide surface for the correct axial insertion of the sleeve 13 into the female mould 3.

The cap 2 is formed by injecting the plastics material into the mould 1, the main tubular body 6 of the cap having dimensions corresponding to the aforesaid first tubular moulding cavity and having external axial grooves 6a corresponding to the ribs on the surface 5 of the mould 3. The main body 6 terminates in a part with a head end 8a having a shape corresponding to the cavity 5a of the head portion 3b of the mould and, at its opposite end, an open end 8b defined by the annular groove 5b of the countermould 3b.

An auxiliary tubular casing 12, the axial extent of which is less than the length of the main body 6 and equal, for example, to approximately half the length of the body 6, is connected to the head end 8a of the cap 2. The casing 12, the shape of which corresponds to the aforesaid second tubular moulding cavity, defines a chamber 12a having an axial end open towards the end 8b of the cap 2, into which the writing tip of the writing instrument P (illustrated in broken outline in Figure 5) can be inserted and kept sealed. Furthermore, the casing 12 is connected to the wall of the main body 6 by a plurality of radial diaphragms 13b, each defined by an associated axial slot 13a in the sleeve 13.

At the region of the mould 1 provided with the projections 4, substantially rectangular radial ventilation apertures 10 are formed in the cap 2, each communicating with an axial ventilation channel 13c defined by an associated arm of the sleeve 13. In this way, and by virtue of the apertures 10, the axial ventilation channels 13c of the cap 2 are also open radially, so that the cap 2 is safer than caps formed according to the prior art, in the event that it is swallowed by the user.

## Claims

1. A mould for a cap of a writing instrument, including a substantially cylindrical female mould (3) having a head portion (3a) and adapted to define a main body (6) of the cap (2) having a head end (8a), a male mould (9) arranged coaxially within the female mould (3) and intended to form an auxiliary blind-ended casing (12) within the main body (6) of the cap (2) for sealingly housing the tip of the writing instrument (P), and a sleeve (13) interposed coaxially between the male and female moulds (3, 9), shaped to define a plurality of axial ventilation channels (13c) which extend between the auxiliary casing (12) and the principal body (6) and open at the head end (8a) of the cap,
**characterised in that** the female mould (3) includes a plurality of elements (4) for centring the end of the sleeve (13) adjacent the said head portion (3a) of the mould (1), the centring elements (4) being adapted to define in the cap (2) radial ventilation apertures (10) radially extending through the main body (6) of the cap (2) from the said axial ventilation channels (13c) to an outer surface of the said main body (6) corresponding to an inner surface of the female mould (3).

2. A mould according to Claim 1, **characterised in that** the centring elements are formed as projections (4) which extend radially from the inner surface (5) of the female mould (3), each having a radial abutment surface (4a) for a corresponding part of the sleeve (13).

3. A mould according to Claim 2, **characterised in that** said projections (4) are equi-angularly spaced around the transverse section of the female mould (3).

4. A mould according to Claim 2 or Claim 3, **characterised in that** each projection (4) has, on the side opposite the head portion (3a) of the female mould (3), an inclined surface (4b) adapted to constitute a guide surface for the axial insertion of the sleeve (13) into the female mould (3).

5. A mould according to any one of Claims 1 to 4, **characterised in that** the axial extent of the auxiliary casing (12) is less than that of the main body (6).

6. A cap for a writing instrument, including a substantially cylindrical main body (6) having an open end (8b) to enable the axial insertion of the writing instrument (P), and a head end (8a) opposite the open end (8b) provided with an auxiliary blind-ended casing (12) arranged coaxially within the main body (6) for sealingly housing the tip of the writing instrument (P), a plurality of axial ventilation channels (13c) being present between the main body (6) and the auxiliary casing (12), which channels open at the head end (8a) of the cap, and
a plurality of radial ventilation apertures (10) being formed at the head end (8a) of the cap (2) and being connected to the said axial ventilation channels (13c),
**characterised in that** the said ventilation apertures (10) radially extend through the main body (6) from the said axial ventilation channels (13c), whereby the said axial ventilation channels (13c) radially open outwards.

7. A cap according to Claim 6, **characterised in that** the said radial apertures (10) are arranged equi-angularly spaced from each other.

8. A cap according to Claim 6 or Claim 7, **characterised in that** the axial extent of the auxiliary casing (12) is less than that of the main body (6).

## Patentansprüche

1. Form für eine Kappe eines Schreibinstruments, wobei die Form eine im Wesentlichen zylindrische Hohlform (3), die einen Kopfteil (3a) besitzt und so aufgebaut ist, dass sie einen Hauptkörper (6) der Kappe (2) mit einem Kopfende (8a) bilden kann, eine Vollform (9), die in der Hohlform (3) koaxial angeordnet ist und dazu dient, um ein blind endendes Hilfsgehäuse (12) innerhalb des Hauptkörpers (6) der Kappe (2) zu bilden, um die Spitze des Schreibinstruments (P) abgedichtet aufzunehmen, sowie eine Buchse (13) aufweist, die koaxial zwischen der Vollform und der Hohlform (3, 9) liegt und so geformt ist, um eine Vielzahl von axialen Belüftungskanälen (13c) zu bilden, die zwischen dem Hilfsgehäuse (12) und dem Hauptkörper (6) verlaufen und sich am Kopfende (8a) der Kappe öffnen,
**dadurch gekennzeichnet, dass** die Hohlform (3) eine Vielzahl von Elementen (4) aufweist, um das Ende der Buchse (13) neben dem Kopfteil (3a) der Form (1) zu zentrieren, wobei die Zentrierelemente (4) so aufgebaut sind, dass sie in der Kappe (2) radiale Belüftungsöffnungen (10) bilden, die radial durch den Hauptkörper (6) der Kappe (2) von den axialen Belüftungskanälen (13c) zu einer Außenfläche des Hauptkörpers (6) verlaufen, die einer Innenfläche der Hohlform (3) entspricht.

2. Form gemäß Anspruch 1, **dadurch gekennzeichnet, dass** die Zentrierelemente als Vorsprünge (4) ausgebildet sind, die radial von der Innenfläche (5) der Hohlform (3) verlaufen,
wobei jedes Element eine radiale Auflagefläche (4a) für einen entsprechenden Teil der Buchse (13) besitzt.

3. Form gemäß Anspruch 2, **dadurch gekennzeichnet, dass** die Vorsprünge (4) in gleichen Winkelabständen rund um den Querschnitt der Hohlform (3) beabstandet sind.

4. Form gemäß Anspruch 2 oder Anspruch 3, **dadurch gekennzeichnet, dass** jeder Vorsprung (4) an der dem Kopfteil (3a) der Hohlform (3) gegenüber liegenden Seite eine schräge Fläche (4b) besitzt, die so aufgebaut ist, dass sie eine Führungsfläche für das axiale Einsetzen der Buchse (13) in die Hohlform (3) bildet.

5. Form gemäß irgendeinem der Ansprüche 1 bis 4, **dadurch gekennzeichnet, dass** die axiale Länge des Hilfsgehäuses (12) kleiner als die axiale Länge des Hauptkörpers (6) ist.

6. Kappe für ein Schreibinstrument, wobei die Kappe einen im Wesentlichen zylindrischen Hauptkörper (6) mit einem offenen Ende (8b), um das Schreibinstrument (P) axial einsetzen zu können, sowie mit einem Kopfende (8a) aufweist, das gegenüber dem offenen Ende (8b) liegt und mit einem blind endenden Hilfsgehäuse (12) versehen ist, das koaxial innerhalb des Hauptkörpers (6) angeordnet ist, um die Spitze des Schreibinstruments (P) abgedichtet aufzunehmen, wobei eine Vielzahl von axialen Belüftungskanälen (13c) zwischen dem Hauptkörper (6) und dem Hilfsgehäuse (12) vorhanden ist, wobei sich diese Kanäle am Kopfende (8a) der Kappe öffnen, und wobei eine Vielzahl von radialen Belüftungsöffnungen (10) am Kopfende (8a) der Kappe (2) ausgebildet und mit den axialen Belüftungskanälen (13c) verbunden ist,
**dadurch gekennzeichnet, dass** die Belüftungsöffnungen (10) radial durch den Hauptkörper (6) von den axialen Belüftungskanälen (13c) verlaufen, wodurch sich die axialen Belüftungskanäle (13c) radial nach außen öffnen.

7. Kappe gemäß Anspruch 6, **dadurch gekennzeichnet, dass** die radialen Öffnungen (10) in gleichen Winkelabständen voneinander beabstandet sind.

8. Kappe gemäß Anspruch 6 oder Anspruch 7, **dadurch gekennzeichnet, dass** die axiale Länge des Hilfsgehäuses (12) kleiner als die axiale Länge des Hauptkörpers (6) ist.

## Revendications

1. Moule pour le capuchon d'un instrument permettant d'écrire, comprenant un moule négatif sensiblement cylindrique (3) ayant une partie formant tête (3a) et adapté pour définir un corps principal (6) du capuchon (2) ayant une extrémité de tête (8a), un moule positif (9) disposé de manière coaxiale à l'intérieur du moule négatif (3) et destiné à former un boîtier fermé auxiliaire (12) à l'intérieur du corps principal (6) du capuchon (2) pour loger de manière hermétique le bout de l'instrument permettant d'écrire (P), et un manchon (13) intercalé de manière coaxiale entre les moules négatif et positif (3, 9), formé pour définir une pluralité de canaux d'aération axiaux (13c) qui s'étendent entre le boîtier auxiliaire (12) et le corps principal (6) et s'ouvrent au niveau de l'extrémité de tête (8a) du capuchon,
**caractérisé en ce que** le moule négatif (3) comprend une pluralité d'éléments (4) pour centrer l'extrémité du manchon (13) de manière adjacente à ladite partie formant tête (3a) du moule (1), les éléments de centrage (4) étant adaptés pour définir dans le capuchon (2) des ouvertures d'aération radiales (10) s'étendant de manière radiale à travers le corps principal (6) du capuchon (2) à partir desdits canaux d'aération axiaux (13c) jusqu'à une surface extérieure dudit corps principal (6) correspondant à une surface intérieure du moule négatif (3).

2. Moule selon la revendication 1, **caractérisé en ce que** les éléments de centrage sont formés comme saillies (4) qui s'étendent de manière radiale à partir de la surface intérieure (5) du moule négatif (3), chacune ayant une surface d'aboutement radiale (4a) pour une partie correspondante du manchon (13).

3. Moule selon la revendication 2, **caractérisé en ce que** lesdites saillies (4) sont espacées de manière équiangulaire autour de la section transversale du moule négatif (3).

4. Moule selon la revendication 2 ou la revendication 3, **caractérisé en ce que** chaque saillie (4) a, sur le côté opposé à la partie formant tête (3a) du moule négatif (3), une surface inclinée (4b) adaptée pour constituer une surface de guidage pour l'insertion axiale du manchon (13) dans le moule négatif (3).

5. Moule selon l'une quelconque des revendications 1 à 4, **caractérisé en ce que** l'étendue axiale du boîtier auxiliaire (12) est inférieure à celle du corps principal (6).

6. Capuchon pour un instrument permettant d'écrire, comprenant un corps principal sensiblement cylindrique (6) ayant une extrémité ouverte (8b) pour permettre l'insertion axiale de l'instrument permettant d'écrire (P), et une extrémité de tête (8a) opposée à l'extrémité ouverte (8b) dotée d'un boîtier fermé auxiliaire (12) disposé de manière coaxiale à l'intérieur du corps principal (6) pour loger de manière hermétique le bout de l'instrument permettant d'écrire (P), une pluralité de canaux d'aération axiaux (13c) étant présente entre le corps principal (6) et le boîtier auxiliaire (12), lesquels canaux sont ouverts au niveau de l'extrémité de tête (8a) du capuchon, et
une pluralité d'ouvertures d'aération radiales (10) étant formée au niveau de l'extrémité de tête (8a) du capuchon (2) et étant reliée auxdits canaux d'aération axiaux (13c),
**caractérisé en ce que** lesdites ouvertures d'aération (10) s'étendent de manière radiale à travers le corps principal (6) à partir desdits canaux d'aération axiaux (13c), moyennant quoi lesdits canaux d'aération axiaux (13c) s'ouvrent de manière radiale vers l'extérieur.

7. Capuchon selon la revendication 6, **caractérisé en ce que** lesdites ouvertures radiales (10) sont espacées de manière equiangulaire les unes des autres.

8. Capuchon selon la revendication 6 ou la revendication 7, **caractérisé en ce que** l'étendue axiale du boîtier auxiliaire (12) est inférieure à celle du corps principal (6).
